# EUROPEAN PATENT SPECIFICATION

(11) **EP 1 652 893 B1**
(45) Date of publication and mention of the grant of the patent: **02.11.2011**
(21) Application number: 05020506.1
(22) Date of filing: 20.09.2005
(51) Int. Cl.: C09B 41/00, B01J 19/26

(54) **Production process and system for insoluble azo pigments**
Herstellungsverfahren sowie -Vorrichtung für unloesliche Azopigmente
Procédé et système de production pour un pigment azoique insoluble

(30) Priority: 21.10.2004 JP 2004306807; 27.10.2004 JP 2004312064; 10.11.2004 JP 2004325833; 10.11.2004 JP 2004325834
(43) Date of publication of application: 03.05.2006
(73) Proprietor: DAINICHISEIKA COLOR & CHEMICALS MFG. CO. LTD., Chuo-ku, Tokyo 103-8383 (JP)
(72) Inventor: Inoue, Shigeru Dainichiseika Col. & Chem. Mfg Co., Chuo-ku Tokyo 103-8383 (JP); Nagatsuka, Kouichi Dainichiseika Color & Chemical, Chuo-ku Tokyo 103-8383 (JP); Mori, Masahiro Dainichiseika Color & Chemical, Chuo-ku Tokyo 103-8383 (JP); Takami, Shotoku Dainichiseika Color & Chemical, Chuo-ku Tokyo 103-8383 (JP); Iohara, Kazuo Dainichiseika Color & Chemical, Chuo-ku Tokyo 103-8383 (JP); Kibe, Shigemitsu Dainichiseika Color & Chemical, Chuo-ku Tokyo 103-8383 (JP); Kaneko, Kazuhiko Dainichiseika Color & Chemical, Chuo-ku Tokyo 103-8383 (JP)
(74) Representative: Hartz, Nikolai

(56) References cited:
- WO-A-2004/037929
- CH-A- 396 945
- DE-A1- 2 352 735
- DE-A1- 10 049 200
- DE-A1- 19 946 134
- FR-A- 2 805 475
- US-A- 4 341 701
- DATABASE WPI Section Ch, Week 199125 Derwent Publications Ltd., London, GB; Class H01, AN 1991-181961 XP002377300 -& JP 03 110289 A (KYOWA KK) 10 May 1991 (1991-05-10)

## Description

### Technical Field

This invention relates to a process and system for producing insoluble azo pigments by using an ejector, and more specifically to an ejector-relying process and system for the production of insoluble azo pigments useful as offset inks, gravure inks, paints, colorants for plastics, textile-printing pigments, color toners, inkJet printing inks, and the like.

### Background Art

WO 2004/037929 discloses a method for producing organic pigments.

The term "insoluble azo pigment" as used herein means an azo pigment the raw materials of which, that is, a diazonium salt or tetrazonium salt and a grounder component both contain no water-soluble group(s) such as carboxyl and/or sulfonic group(s). The term "diazo solution" as used herein means a solution of the diazonium salt or tetrazonium salt of an aromatic amine or diamine. The term "grounding solution" as used herein means a solution of a grounder component or a fine dispersion of a grounder component. Further, the term "grounder component" as used herein has the same meaning as a coupling component.

As ordinary production processes for insoluble azo pigments, the following processes are known:
(1) A diazo solution is added to a grounding solution to induce a coupling reaction between a diazo component and a grounder component;
(2) A diazo solution and a grounding solution are simultaneously added to a buffer solution of desired pH value to induce the above-mentioned reaction; and
(3) A grounding solution is added to a diazo solution to induce the above-mentioned reaction (see JP-A-56-81367).

These processes each produces a pigment by stirring and mixing a diazo solution and a grounding solution in a single reaction tank. Upon charging the diazo solution and grounding solution into the single reaction tank as large as several tens cubic meters, enormous time and energy are required to achieve a high coupling reaction rate. It is, therefore, very difficult to control factors which vary with time and affect the formation of pigment particles, such as the coupling reaction temperature, the concentrations of the diazo component and grounder component, the stirring state of the reaction mixture, and the pH of the reaction mixture. As a consequence, the resulting pigment tends to become irregular in particle size. In addition, the above-described processes require a long time until the coupling reaction is completed, so that pigment particles formed earlier are prone to flocculation. Upon using the pigment, such irregular particle sizes and flocculation adversely affect the dispersibility, transparency, vividness, coloring strength and gloss of the pigment.

With a view to resolving the above-described problem, it has been investigated to add, to a diazo solution or grounding solution, a diazo component or grounder component different from the diazo component or grounder component in the solution upon producing an insoluble azo pigment. For example, a process is disclosed in JP-B-55-10630. According to this process, a monoazo pigment is produced by mixing and coupling an acetoacetanilide-, pyrazolone- and/or naphthol-based grounder component, another grounder component modified with carboxyl group(s), sulfonic group(s), carboxamido group(s) or the like, and a diazo component. Another process is disclosed in JP-B-55-49087. According to this process, a disazo pigment is produced by mixing and coupling an acetoacetanilide- and/or pyrazolone-based grounder component, another grounder component modified with carboxyl group (s) , sulfonic group(s) and/or the like, and a disazo component.

The use of a second grounder component in combination with a first grounder component as mentioned above makes it possible to provide the resulting pigment with smaller particle sizes, thereby bringing about good effects on the transparency, coloring strength, dispersibility and the like of the pigment upon its use. On the other hand, the resulting pigment particles are so fine that the pigment particles are prone to flocculation, thereby possibly giving adverse effects on the transparency, coloring strength, dispersibility and the like of the pigment upon its use. There is a further problem in that according to the manner of stirring in a conventional batchwise single reaction tank, the resulting pigment tends to have irregular particle sizes even when the above-mentioned second grounder component is added.

With the above-described conventional production process making use of the single reaction tank, there is a limitation imposed on the ability to stir the reaction mixture so that a satisfactory coupling reaction rate is not always available. As a consequence, a reduction tends to occur in the yield of the resulting pigment. Any attempt to obtain the pigment with an increased yield leads to a reduction in the productivity of the pigment such as the need for use of a grounder component in excess relative to a diazo component.

Further, the conventional single reaction tank requires the use of a greater stirrer as its scale becomes greater. Enormous time and energy are, therefore, required for the production of a pigment. Similarly to the foregoing, a reduction is induced in the productivity of the pigment so that in the production of the pigment, the payability is lowered.

As a process free of these problems, a process making use of a microreactor was introduced for the production of pigments (see "The 27^{th} Symposium on Physical Properties of Pigments", "Common Features between Pigment Technology and Nanotechnology", "Trend of Developments on Organic Pigments and Use of Microreactors", *written in Japanese).* This process can easily control the reaction temperature, reaction time and the like upon coupling, can provide pigment particles of uniform particle size, and is economical. However, the reaction system (reaction channels) inside the microreactor is so small that the process can hardly perform any mass production of a pigment. Moreover, the resulting pigment particles may cause clogging within the microreactor. Accordingly, this process is low in pigment productivity, and is not considered to be industrially useful.

### Disclosure of the Invention

As described above, the conventional production process as described in JP-A-56-81367 can hardly control the coupling reaction, so that the resulting pigment is irregular in particle sizes and is not provided with sufficient quality. The production process of the above-cited non-patent publication is low in pigment productivity, and can be hardly applied for the industrial mass production of the pigment.

An object of the present invention is, therefore, to provide a process and system for the production of an insoluble azo pigment, said process being easily capable of also meeting the mass production of the pigment and being industrially effective, by continuouslymixing and reacting a diazo solution and a grounding solution in an ejector.

The present inventors have proceeded with extensive research to resolve the above-described problems. Asa result, it has been found that by using an ejector in the production of an insoluble azo pigment and subjecting a diazo solution and a grounding solution to a coupling reaction in a severe turbulence produced within the ejector, the resulting pigment particles can be controlled in particle size, the coupling reaction time can be shortened, the coupling reaction rate can be increased, and the productivity can be improved, leading to the present invention.

Described specifically, the present invention provides the following production methods and systems:
1) A process for the production of an insoluble azo pigment, which comprises ejecting a diazo solution and a grounding solution continuously into an ejector such that within the ejector, the diazo solution and grounding solution are mixed with each other and are subjected to a coupling reaction,
   wherein after subjecting the diazo solution and grounding solution to the coupling reaction, a mixture of a suspension of the resulting insoluble azo pigment and one of the diazo solution and grounding solution and the other solution are continuously ejected into the ejector, and the mixture is repeatedly recirculated through the ejector until the coupling reaction is completed.
2) A process as described above under 1), wherein the diazo solution comprises a first diazo component and a second diazo component different from the first diazo component, and the second diazo component amounts to 0.1 to 50 mole % of the first diazo component.
3) A process as described above under 1), wherein the grounding solution comprises a first grounder component and a second grounder component different from the first grounder component, and the second grounder component amounts to 0.1 to 50 mole % of the first grounder component.
4) A process as described above under 1), further comprising ejecting a buffer solution continuously into the ejector.
5) A process as described above under 1), wherein subsequent to the coupling reaction, a suspension of the resulting insoluble azo pigment is subjected to heat treatment at 50°C or higher and 95°C or lower.
6) A process as described above under 1), wherein the insoluble azo pigment is a monoazo pigment, disazo pigment, β-naphthol pigment, naphthol AS pigment or benzimidazolone pigment.
7) A system for the production of an insoluble azo pigment from a diazo solution and a grounding solution, comprising the following units (1) to (4):
   (1) a first feed tank (2) for a first fluid selected from the diazo solution or grounding solution, a first flow path (a) for feeding the first fluid to nozzles of an ejector (1), and a pump (d) for feeding the first fluid through the first flow path ;
   (2) the ejector (1) provided with the nozzles, a suction chamber, a diffuser, and a temperature control means (g);
   (3) a second feed tank (3) for a second fluid other than the first fluid, a second flow path (b) for guiding the second fluid into the suction chamber of the ejector (1) , and a first flow control means (e) for controlling a flow rate of the second fluid through the second flow path (b);
   (4) a heat treatment tank (5) for subjecting to heat treatment a suspension of the insoluble azo pigment formed by a reaction between the first fluid and the second fluid, and a third flow path (a') for guiding the suspension of the insoluble azo pigment from the diffuser of the ejector to the heat treatment tank; and
   (5) a fourth flow path (a") through which said third flow path (a') and said first feed tank (2) are connected with each other.
8) A system as described above under 7) , wherein a buffer solution is additionally used, and the system further comprises a third feed tank (4) for the buffer solution as a third fluid other than the first and second fluids, a fifth flow path (c) for guiding the third fluid into the suction chamber of the ejector (1) , and a second flow control means (f) for controlling a flow rate of the third fluid through the fifth flow path (c) .

According to the process of the present invention, the use of the ejector which is widely used in industry has made it possible to react a diazo solution and a grounding solution in a severe turbulence produced within the ejector, so that the resulting insoluble azo pigment particles can be controlled in particle size, the coupling reaction time can be shortened, the coupling reaction rate can be increased, and the productivity of the pigment can be improved. The insoluble azo pigment obtained in accordance with the process of the present invention shows excellent dispersibility, transparency, vividness, coloring strength and gloss upon its use.

### Brief Description of the Drawings

FIG. 1 is a flow chart of a system for the production of an insoluble azo pigment under a first or third embodiment, in which only a first fluid and a second fluid are used.
FIG. 2 is a flow chart of a system for the production of an insoluble azo pigment under the first or third embodiment, in which a first fluid, a second fluid and a third fluid are used.
FIG. 3 is a flow chart of a system for the production of an insoluble azo pigment under a second or fourth embodiment, in which only a first fluid and a second fluid are used.
FIG. 4 is a flow chart of a system for the production of an insoluble azo pigment under the second or fourth embodiment, in which a first fluid, a second fluid and a third fluid are used.

### Best Modes for Carrying out the Invention

The present invention will next be described in further detail on the basis of preferred embodiments reference embodiments which are not claimed by the present invention.

### [First Reference embodiment]

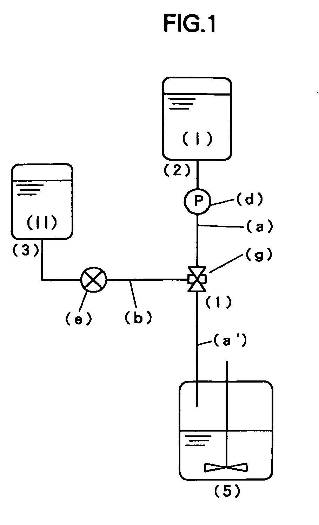

With reference to FIG. 1, a description will be made about a process according to the first reference embodiment for the production of an insoluble azo pigment.

A diazo solution I is fed by a feed pump **d** from a first feed tank 2 through a first flow path **a** such that the diazo solution I is ejected at a desired flow rate from nozzles of an ejector 1 and at the same time, a grounding solution **II** is drawn at a desired flow rate via a first flow control means **e** from a second feed tank 3 into the ejector 1 through a second flow path **b.** The ejector 1 is controlled at a desired temperature by a temperature control means **g,** both of the solutions are mixed together within the ejector 1, and a coupling reaction between the diazo solution and the grounding solution is conducted under turbulent conditions. The thus-obtained suspension of the resultant insoluble azo pigment is fed into a treatment tank 5, which may be provided with a heating means, from the ejector 1 through a third flow path a' to produce the insoluble azo pigment. The thus-stored suspension may be subjected to heat treatment at a desired temperature in the treatment tank 5 as needed.

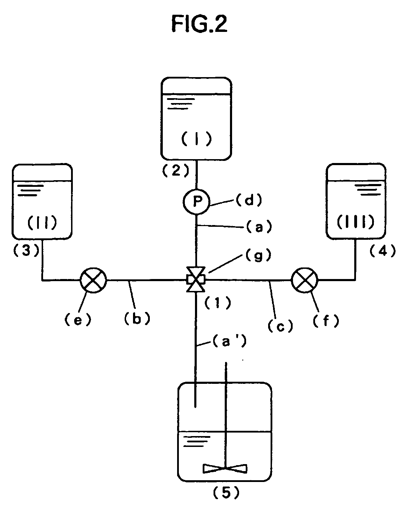

FIG. 2 illustrates the production of an insoluble azo pigment in a similar manner as in the process illustrated in FIG. 1 except that as solutions to be charged into the ejector 1, a buffer solution **III** is used in addition to the diazo solution **I** and grounding solution II by drawing the buffer solution **III** at a desired flow rate via a second flow control means **f** from a third feed tank 4 through a fifth flow path **c.**

The process according to the first reference embodiment for the production of the insoluble azo pigment will next be described specifically.

When the solution to be ejected through the nozzles of the ejector (hereinafter abbreviated as "the first fluid") in the first embodiment is the diazo solution **I,** the solution to be drawn into the ejector (hereinafter abbreviated as "the second fluid") is the grounding solution **II.** When the first fluid is the grounding solution **II,** on the other hand, the second fluid is the diazo solution **I.** Further, when the first fluid is the buffer solution **III,** the second fluid is the diazo solution **I** and the other solution to be drawn into the ejector (hereinafter abbreviated as "the third fluid") is the grounding solution **II.** Here, the second fluid and the third fluid are interchangeable with each other. When the ejector is not used for feeding the buffer solution **III,** the buffer solution **III** may be charged beforehand in the treatment tank. As an alternative, the buffer solution **III** may be added to the diazo solution **I** or the grounding solution **II.**

In the first reference embodiment, the temperatures of the first fluid, second fluid and third fluid can be -5°C or higher and 50°C or lower, preferably 0°C or higher and 30°C or lower, and the temperature of the mixture in the ejector in which the insoluble azo pigment is formed can be -5°C or higher and 50°C or lower, preferably 0°C or higher and 30°C or lower. Any temperatures higher than 50°C are generally not preferred, because the diazo component may decompose and its decomposition products may adversely affect the hue, vividness and the like of the pigment. Any temperatures of -5°C or lower are generally not preferred, because the solvent is aqueous. To maintain the above-described temperatures, the production system according to the first reference embodiment may preferably be provided at the ejector thereof with a temperature control means for controlling the temperatures.

In the first reference embodiment, the suspension discharged from the ejector and containing the insoluble azo pigment can preferably be subjected to heat treatment in the treatment tank. By subjecting the suspension of the insoluble azo pigment to heat treatment at 50°C or higher and 98°C or lower, preferably at 70°C or higher and 95°C or lower, the pigment can be provided with more uniform particle sizes and excellent dispersibility. A heat treatment temperature lower than 50°C may not allow the particle size of the pigment to grow and therefore, and may not be preferred depending on the application. A heat treatment temperature higher than 98°C may be not preferred because the solvent is aqueous.

In the process according to the first reference embodiment for the production of the insoluble azo pigment, the first fluid can be fed preferably at a flow rate sufficient to produce such a degree of depressurization that the second fluid or third fluid can be sufficiently drawn. The preferred flow rate of the first fluid cannot be specified because it is determined depending upon the size (dimensions) of the ejector, the capacity of the feed pump and the diameter of the flow path. In view of working efficiency and the like, however, the flow rate can be generally 1 L/min or higher, preferably 5 L/min or higher. A flow rate lower than 1 L/min leads to low working efficiency and does not produce any sufficient degree of depressurization, and therefore, is not preferred. The drawn flow rate of the second fluid or the total drawn flow rate of the second fluid and third fluid can be not greater than one third (on a volume basis) of the flow rate of the first fluid. A drawn flow rate higher than one third leads to an excessively large total volume of liquid in the suction chamber, so that no sufficient turbulence is obtained in the ejector and the reaction between the diazo component and the grounder component cannot be conducted efficiently. Such a high drawn flow rate is hence not preferred.

The ejectors useful in the first reference embodiment and the remaining second to fourth embodiments are devices, each of which ejects the first fluid from the nozzles into the suction chamber and then causes the first fluid to flow into the diffuser such that the suction chamber is depressurized to draw the second fluid or third fluid and the second fluid or third fluid and the first fluid are then pressurized and discharged. In the first reference embodiment, the suction chamber is provided with one or more suction ports to permit mixing two or more fluids together in a turbulent state in the suction chamber and diffuser and at the same time, to permit performing the coupling reaction efficiently in a short time. As the fluids can be instantaneously mixed and reacted within the ejector, the coupling reaction time can be significantly shortened. As a consequence, variations can be prevented in the reaction temperature, reactant concentrations and pH, thereby making it possible to eliminate factors which may give adverse effects on pigment particles.

### [Second embodiment]

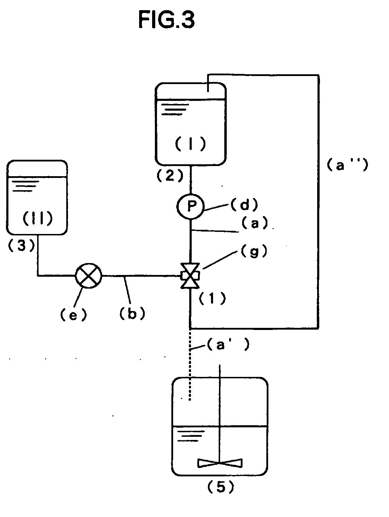

With reference to FIG. 3, a description will be made about a process according to the second embodiment for the production of an insoluble azo pigment according to the invention.

A diazo solution **I** is fed by the feed pump **d** from the first feed tank 2 through the first flow path **a** such that the diazo solution **I** is ejected at a desired flow rate from the nozzles of the ejector 1 and at the same time, a grounding solution **II** is drawn at a desired flow rate via the first flow control means **e** from the second feed tank 3 into the ejector 1 through the second flow path **b.** The ejector 1 is controlled at a desired temperature by the temperature control means **g,** both of the solutions are mixed together within the ejector 1, and a coupling reaction is conducted under turbulent conditions. The thus-obtained suspension of the resultant insoluble azo pigment is recirculated back to the first feed tank 2 through a third flow path **a",** and the resulting mixture (also indicated by I) of the diazo solution and the suspension of the insoluble azo pigment is again fed by the feed pump **d** from the first feed tank 2 through the first flow path **a** such that the mixture is ejected from the nozzles of the ejector 1, and this recirculation is continued until the coupling reaction is completed. Concurrently with this recirculation, the grounding solution **II** is continuously drawn and, when the reaction has been completed, the grounding solution **II** no longer remains in the second feed tank 3.

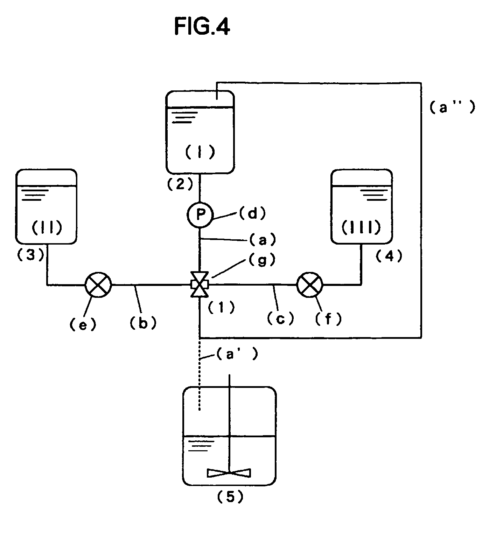

The suspension of the insoluble azo pigment, which has been obtained after the completion of the reaction, is stored in the treatment tank 5 from the ejector 1 through the third flow path **a' ,** and is subjected to a heat treatment at a desired temperature to produce the insoluble azo pigment. In the above-described production process, only the diazo solution flows through the first flow path **a** until the reaction begins, and the mixture of the diazo solution and the suspension of the insoluble azo pigment flow through the first flow path a after the reaction has begun. In FIG. 4, an insoluble azo pigment is produced by a similar production process as the production process shown in FIG. 3 although three solutions are charged into the ejector.

The process according to the second embodiment for the continuous production of the insoluble azo pigment will next be described specifically.

When the solution to be mixed with the insoluble azo pigment suspension(hereinafter abbreviated as "the first fluid") in the second embodiment is the diazo solution I, the solution to be drawn into the ejector (hereinafter abbreviated as "the second fluid") is the grounding solution **II.** When the first fluid is the grounding solution **II,** on the other hand, the second fluid is the diazo solution I. Further, when the first fluid is the buffer solution **III,** the second fluid is the diazo solution I and the other solution to be drawn into the ejector (hereinafter abbreviated as "the third fluid") is the grounding solution **II.** Here, the second fluid and the third fluid are interchangeable with each other.

When the ejector is not used for feeding the buffer solution **III,** the buffer solution **III** may be charged beforehand in the treatment tank. As an alternative, a component of the buffer solution, that is, a buffer may be added to the diazo solution **I** or the grounding solution **II.** The first fluid and second fluid or the first fluid, second fluid and third fluid are reacted in the ejector to form an insoluble azo pigment, whereby a suspension of the insoluble azo pigment is formed. The insoluble azo pigment is produced by recirculating a mixture of the suspension and the first fluid until the coupling reaction is completed.

In the second embodiment, the temperatures of the first fluid, the suspension of the insoluble azo pigment, the mixture of the first fluid and the suspension of the insoluble azo pigment, the second fluid and the third fluid can be -5°C or higher and 50°C or lower, preferably 0°C or higher and 30°C or lower, and the temperature of the mixture in the ejector in which the insoluble azo pigment is formed can be -5°C or higher and 50°C or lower, preferably 0°C or higher and 30°C or lower. Any temperatures higher than 50°C are generally not preferred, because the diazo component may decompose and its decomposition products may adversely affect the hue, vividness and the like of the pigment. Any temperatures lower than -5°C are generally not preferred, because the solvent is aqueous. To maintain the above-described temperatures, the production system according to the second embodiment may preferably be provided at the ejector thereof with a temperature control means for controlling the temperatures.

After the reaction has been completed in the second embodiment, the suspension of the insoluble azo pigment is discharged from the ejector and then stored in the treatment tank. Subsequently, the suspension can preferably be subjected to heat treatment in the treatment tank. By subjecting the suspension of the insoluble azo pigment to heat treatment at 50°C or higher and 98°C or lower , preferably at 70°C or higher and 95°C or lower, the pigment can be provided with more uniform particlesizesand excellent dispersibility. A heat treatment temperature lower than 50°C may not allow the particle size of the pigment to grow and therefore, may not be preferred depending on the application. A heat treatment temperature higher than 98°C is not preferable because the solvent is aqueous.

In the process according to the second embodiment for the production of the insoluble azo pigment, the first fluid and the suspension of the insoluble azo pigment can be fed preferably at a total flow rate sufficient to produce such a degree of depressurization that the second fluid or third fluid can be sufficiently drawn. The preferred total flow rate of the first fluid and the suspension of the insoluble azo pigment cannot be specified because it is determined depending upon the size (dimension) of the ejector, the capacity of the feed pump and the diameter of the flow path. In view of working efficiency and the like, however, the total flow rate can be generally 1 L/min or higher, preferably 5 L/min or higher. A total flow rate lower than 1 L/min leads to low working efficiency and does not produce any sufficient degree of depressurization, and therefore, is not preferred. The drawn flow rate of the second fluid or the total drawn flow rate of the second fluid and third fluid can be not greater than one third (on a volume basis) of the total flow rate of the first fluid and the suspension of the insoluble azo pigment. A drawn flow rate higher than the one third leads to an excessively large total volume of liquid in the suction chamber, so that no sufficient turbulence is obtained and the reaction cannot be conducted efficiently. Such a high drawn flow rate is hence not preferred.

As the recirculation is repeated, the mixture of the first fluid and the suspension of the insoluble azo pigment newly forms the pigment, and as a result, the concentration of the insoluble azo pigment in the mixture of the first fluid and the suspension of the insoluble azo pigment becomes higher and the concentration of the first fluid becomes lower. This means that the concentrations of the reactants in the ejector varies. It is, therefore, preferred to adjust the drawn flow rates of the second fluid and third fluid such that the concentrations of the reactants are maintained constant in the ejector.

### [Third Reference embodiment]

The third reference embodiment is characterized in that in the above-described first reference embodiment, a diazo solution comprising a first diazo component and a second diazo component, said second diazo component amounting to 0.1 to 50 mole % of the first diazo component, is used as the diazo solution, and/or a grounding solution comprising a first grounder component and a second grounder component, said second grounder component amounting to 0.1 to 50 mole % of the first grounder component, is used as the grounding solution; and all the other production conditions and the like are the same as in the first embodiment.

### [Fourth embodiment]

The fourth embodiment is characterized in that in the above-described second embodiment, a diazo solution comprising a first diazo component and a second diazo component, said second diazo component amounting to 0.1 to 50 mole % of the first diazo component, is used as the diazo solution, and/or a grounding solution comprising a first grounder component and a second grounder component, said second grounder component amounting to 0. 1 to 50 mole % of the first grounder component, is used as the grounding solution; and the other production conditions and the like are the same as in the second embodiment.

As the second diazo component for use in the third and fourth embodiments, a derivative of the first diazo component is used. Examples of the derivative of the first diazo component include derivatives of the first diazo component, which are each substituted by one or more of lower alkyl groups having 1 to 4 carbon atoms, alkoxy groups, halogen atoms, carboxyl groups, sulfonic groups, hydroxyl groups, carboxamido groups, sulfonamido groups, acetylamino groups, and the like. These second diazo components can be used either singly or in combination. The content of the second diazo component may be preferably from 0.1 to 50 mole%, more preferably from 0.1 to 20 mole % per 100 mole % of the first diazo component. A content of the second diazo component greater than 50 mole % provides the resulting insoluble azo pigment with reduced vividness, and therefore, is not preferred.

As the second grounder component for use in the third and fourth embodiments, a derivative of the first grounder component is used. Examples of the derivative of the first grounder component include derivatives of the first grounder component, which are each substituted by one or more of lower alkyl groups having 1 to 4 carbon atoms, alkoxy groups, halogen atoms, carboxyl groups, sulfonic groups, hydroxyl groups, carboxamido groups, sulfonamido groups, acetylamino groups, and the like. These second grounder components can be used either singly or in combination. The content of the second grounder component may be preferably from 0.1 to 50 mole %, more preferably from 0.1 to 20 mole % per 100 mole % of the first grounder component. A content of the second grounder component greater than 50 mole % provides the resulting insoluble azo pigment with reduced vividness, and therefore, is not preferred.

Insoluble azo pigments which can be produced by the present invention can include monoazo pigments, disazo pigments, **β**-naphthol pigments, naphthol AS pigments, and benzimidazolone pigments. They can be obtained by coupling diazo components, such as anilines orbenzidines, with grounder components including acetoacetanilides, pyrazolone derivatives, **β**-naphthols, naphthols AS or the like. The diazo components and grounder components usable in the present invention are those employed in the production of conventionally-known, insoluble azo pigments as described above, and no particular limitation is imposed thereon.

As the buffer for use in the buffer solution III in the present invention, acetic acid/sodium acetate, formic acid/sodium formate, or carbonic acid/sodium carbonate or sodium hydrogencarbonate can be mentioned. The pH of the buffer solution may range from 3.0 to 6.5, preferably from 3.5 to 5.5. A pH lower than 3.0 results in a slower coupling reaction, and therefore, is not preferred. A pH higher than 6.5, on the other hand, results in a faster coupling reaction, but tends to induce the decomposition of the diazo component, and hence, results in the inclusion of impurities at higher concentrations in the resulting pigment. Such an excessively high pH is, therefore, not preferred.

In the process of the present invention for the production of the insoluble azo pigment, it is preferred to use the grounder component in excess relative to the diazo component. The degree of an excess of the grounder component relative to the diazo component can range from 0.5 to 5 mole %, preferably from 0.5 to 3 mole %. Concerning the reaction ratio of the diazo component to the grounder component when the insoluble azo pigment is a monoazo pigment, the coupling reaction can be conducted by continuously feeding and drawing the diazo solution and the grounding solution such that the molar ratio of the diazo component to the grounder solution falls within a range of from 1:1.005 to 1:1.05, preferably from 1:1.005 to 1:1.03. When the insoluble azo pigment is a disazo pigment, the coupling reaction takes place through a reaction of 2 moles of the grounder component with 1 mole of the diazo component. With respect to their reaction ratio, the coupling reaction can be conducted by continuously feeding and drawing the diazo solution and the grounding solution such that the molar ratio of the diazo component to the grounder solution falls within a range of from 1:2.01 to 1:2.10, preferably from 1:2.01 to 1:2.06. By limiting the degree of an excess of the grounder component to a small excess and conducting the reaction efficiently within the ejector, the diazo component does not remain unreacted, thereby making it possible to prevent side reactions which would otherwise take place through the decomposition of the diazo component or the intermolecular condensation of the diazo component. The production process according to the present invention makes it possible to reduce the degree of an excess of the grounder component compared with the reaction in the conventional batchwise single reaction tank as described above, leading to a reduction in the amount of the unreacted grounder component so that the resulting pigment can be provided with improved vividness and coloring strength.

In the present invention, a surfactant, rosin or solvent may be added, as an aid to the dispersibility of the pigment, to the diazo solution, grounding solution or buffer solution, or such an aid may also be added to the suspension of the pigment before, during or after subjecting the suspension to heat treatment in the treatment tank. It is also possible to provide the ejector with a still further intake port and to draw a solution or solvent with the above-described aid dissolved therein.

### Examples

The present invention will next be described specifically on the basis of Examples and Comparative Examples, although the present invention shall by no means be limited by the following Examples and Comparative Examples. It is to be noted that the designations of "part" or "parts" and "%" in the following Examples and Comparative Examples are all on a weight basis unless otherwise specifically indicated. In the following Examples and Comparative Examples, descriptions will be made using the reference signs of the individual units, devices and the like in the flow charts of FIG. 1 to FIG. 4.

### [First Reference embodiment]

### Reference Example 1

3,3'-Dichlorobenzidine hydrochloride was diazotized in a manner known *per* se in the art by using a threefold molar amount of hydrochloric acid and a twofoldmolar amount of sodium nitrite to prepare a 0.125 mole/L diazo solution (8 L, solution temperature: 5°C). On the side, acetoacetanilide (358 parts) was dissolved in an aqueous solution, which contained sodium hydroxide (120 parts), to prepare a 0.253 mole/L grounding solution (8 L, solution temperature: 20°C). Also prepared was a buffer solution of pH 4.7 (80 L, solution temperature: 20°C) which consisted of an 80% solution of acetic acid in water (300 parts), sodium hydroxide (80 parts) and water.

As illustrated in FIG. 2, the buffer solution was next caused to flow as a first fluid I at a flow rate of 6 L/min by the feed pump d from the first feed tank 2 into the ejector 1 through the first flow path a. Owing to depressurization occurred in the ejector 1, the diazo solution was drawn as a second fluid II at a flow rate of 0.6 L/min (adjusted by the first flow control means e) from the second feed tank 3 through the second flow path b and the grounding solution was also drawn as a third fluid III at a flow rate of 0. 6 L/min (adjusted by the second flow control means f) from the third feed tank 4 through the fifth flow path **c,** both into the ejector 1 maintained at 20°C by the temperature control means **g,** and through a coupling reaction, a disazo pigment C.I. Pigment Yellow 12 (PY12) was yielded.

The yield of the disazo pigment was very good owing to the effects of a severe turbulence occurred concurrently with the coupling reaction in the ejector. The degree of an excess of the grounder component relative to the diazo component was as much as about 1 mole %. Nonetheless, the coupling reaction proceeded smoothly, and the coupling reaction time was about 14 min. The thus-obtained aqueous suspension of the resulting pigment was discharged from the ejector 1 through the third flow path **a',** and was stored in the treatment tank 5. After the thus-stored aqueous suspension of the pigment was heated to 90°C, the pigment was collected by filtration and washed with water to obtain a wet cake of the disazo pigment (PY12) . The pigment content of the wet cake was 24.5%.

### Comparative Example 1

A diazo solution was prepared in a similar manner as in Example 1. On the side, acetoacetanilide (376 parts) was dissolved in an aqueous solution, which contained sodium hydroxide (120 parts), to prepare a 0.265 mole/L grounding solution (8 L, solution temperature: 20°C). Also prepared was a buffer solution of pH 4.7 (20 L, solution temperature: 20°C) which consisted of an 80% solution of acetic acid in water (300 parts) , sodium hydroxide (80 parts) and water. The buffer was charged in a batchwise single reaction tank equipped with a stirrer, and under stirring, the diazo solution and the grounding solution were simultaneously charged over 1.5 hours through separate inlet lines to form a disazo pigment (PY12). The degree of an excess of the grounder component relative to the diazo component was 6mole %. After the aqueous suspension of the pigment was heated to 90°C, the pigment was collected by filtration and washed with water to afford a wet cake of the disazo pigment (PY12). The pigment content of the wet cake was 25.8%.

### Test 1

By the below-described methods, an applicability test of each of the wet cakes of PY12, which were afforded in Reference Example 1 and Comparative Example 1, respectively, in offset inks was performed as will be described next. After an offset ink varnish (230 parts) heated to 70°C was added to a 1-L flusher, the wet cake (90 parts in terms of pigment solid) was added, and with kneading, flushing was conducted for 20 minutes. Subsequent to removal of separated water, the temperature of the flusher was raised to 90°C while driving off water in a vacuum to completely remove water. The offset ink varnish (350 parts) and an offset ink solvent (30 parts) were then added little by little to prepare a base ink (700 parts) . The offset ink varnish (15 parts), the solvent (10 parts) and an aid (5 parts) were added to an aliquot (70 parts) of the base ink so that the tack was adjusted to 6.3 to 6.5 to afford an offset ink for testing.

Evaluation of test inks afforded as described above was performed as will be described hereinafter.

### [Transparency]

Each test ink was spread over an ink-spreading black band, and the thus-spread state of the test ink on the black band was visually determined. Supposing that the transparency of the test ink making use of the wet cake afforded in Comparative Example 1 had a standard value of 5, transparency was ranked in accordance with a 10-level grading scale. A greater value indicates higher transparency.

### [Coloring strength]

Each test ink was spread by an RI tester over a sheet of art paper, and its density was measured by a Gretag densitometer (reflection densitometer) to rank the coloring strength. A greater value indicates higher coloring strength.

### [Gloss]

Each test ink was spread by an RI tester over a sheet of art paper, and the reflected light was measured by a densitometer to rank the gloss. A greater value indicates higher gloss. The results of the above evaluation are shown in Table 1. The pigment of Reference Example 1 showed excellent transparency, coloring strength and gloss compared with the pigment of Comparative Example 1.

It is clear from the foregoing that the production process of Reference Example 1 can provide a pigment having finer and more uniform particles and better dispersibility than the production process of Comparative Example 1.

**Table 1**

| | Transparency | Coloring strength | Gloss |
|---|---|---|---|
| Reference Example 1 | 7 | 1.58 | 56.0 |
| Comp. Ex. 1 | 5 | 1.47 | 52.5 |

### Reference Example 2

A disazo pigment (PY14) was produced in a similar manner as in Reference Example 1 except for the use of acetoacet-o-toluidide (387 parts) instead of the use of acetoacetanilide (358 parts). The thus-obtained wet cake pigment was dried to afford the disazo pigment (PY14) in a dry form.

### Comparative Example 2

A disazo pigment (PY14) was produced in a similar manner as in Comparative Example 1 except for the use of acetoacet-o-toluidide (405 parts) instead of the use of acetoacetanilide (376 parts). The thus-obtained wet cake pigment was dried to afford the disazo pigment (PY14) in a dry form.

### Test 2

By the below-described methods, a gravure ink of each of the dry pigments of PY14, which were afforded in Reference Example 2 and Comparative Example 2, respectively, was prepared, and its applicability test as a gravure ink was performed. The test gravure ink was prepared by placing a nitrocellulose-based, gravure ink varnish (90 parts) and the pigment (10 parts), which had been ground through a 60-mesh wire screen, in a glass bottle (capacity: 200 parts), adding glass beads of 3 mm in diameter (100 parts), and then conducting dispersion for 1 hour on a Red Devil dispenser.

### [Transparency]

Each test ink so obtained was spread over a triacetate film, the film with the test ink spread thereon was placed on a sheet of black paper, and its transparency was visually determined. Supposing that the transparency of the test ink making use of the pigment afforded in Comparative Example 2 had a standard value of 5, transparency was ranked in accordance with a 10-level grading scale. A greater value indicates higher transparency.

### [Coloring strength]

Using ink-spread films prepared in a similar manner as in the ranking of the transparency, the coloring strengths of the test inks were visually determined. Supposing that the coloring strength of the test ink making use of the pigment afforded in Comparative Example 2 had a standard value of 5, coloring strength was ranked in accordance with a 10-level grading scale. A greater value indicates higher coloring strength.

### [Gloss]

Reflected light from each ink-spread film was measured by a gloss meter to rank its gloss. A greater value indicates higher gloss.

The results of the above evaluation are shown in Table 2. The pigment of Reference Example 2 showed excellent transparency, coloring strength and gloss compared with the pigment of Comparative Example 2. It is clear from the foregoing that the production process of Reference Example 2 can provide a pigment having finer and more uniform particles and better dispersibility than the production process of Comparative Example 2.

**Table 2**

| | Transparency | Coloring strength | Gloss |
|---|---|---|---|
| Reference Example 2 | 7 | 6 | 62.2 |
| Comp. Ex. 2 | 5 | 5 | 46.4 |

### Reference Example 3

3-Amino-4-methoxybenzanilide was diazotized in a manner known per se in the art by using a 3. 5-fold molar amount of hydrochloric acid and an equimolar amount of sodium nitrite, followed by the addition of sodium acetate to prepare a 0.025 mole/L diazo solution of pH 4.0 (40 L, solution temperature: 5°C) . On the side, N-(4-chloro-2,5-dimethoxyphenyl)-3-hydroxy-2-napthaleneca rboxamide (naphthol AS-LC) (362 parts) was dissolved in an aqueous solution, which contained sodium hydroxide (100 parts), to prepare a 0.126 mole/L grounding solution (8 L, solution temperature: 20°C).

As illustrated in FIG. 1, the diazo solution was next caused to flow as a first fluid **I** at a flow rate of 6 L/min by the feed pump **d** from the first feed tank 2 into the ejector 1 through the first flow path **a.** Owing to depressurization occurred in the ejector 1, the grounding solution was drawn as a second fluid **II** at a flow rate of 1.2 L/min (adjusted by the first flow control means **e)** from the second feed tank 3 through the second flow path **b** into the ejector 1 maintained at 20°C by the temperature control means **g,** and through a coupling reaction, a naphthol AS pigment [C.I. Pigment Red 146 (PR146)] was yielded.

The yield of the naphthol AS pigment was very good owing to the effects of a severe turbulence occurred concurrently with the coupling reaction in the ejector. The degree of an excess of the grounder component relative to the diazo component was as much as about 1 mole %. Nonetheless, the coupling reaction proceeded smoothly, and the coupling reaction time was about 7 min. The thus-obtained aqueous suspension of the resulting pigment was discharged from the ejector 1 through the third flow path **a'**, and was stored in the treatment tank 5. After the thus-stored aqueous suspension of the pigment was heated to 90°C, the pigment was collected by filtration, washed with water and then dried to obtain the naphthol AS pigment (PR146) in a dry form.

### Comparative Example 3

A diazo solution was prepared in a similar manner as in Example 3. On the side, N-(4-chloro-2,5-dimethoxyphenyl)-3-hydroxy-2-napthaleneca rboxamide (naphthol AS-LC) (376 parts) was dissolved in an aqueous solution, which contained sodium hydroxide (100 parts) , to prepare a 0.131 mole/L grounding solution (8 L, solution temperature: 20°C). The diazo solution was charged in a batchwise single reaction tank equipped with a stirrer, and under stirring, the grounding solution was charged over 1 hour to form a naphthol AS pigment (PR146). The degree of an excess of the grounder component relative to the diazo component was 5 mole %. After the resulting aqueous suspension of the pigment was heated to 90°C, the pigment was collected by filtration, washed with water and then dried to obtain the naphthol AS pigment (PR146) in a dry form.

### Test 3

An applicability test of each of the dry pigments of PR146, which were obtained in Reference Example 3 and Comparative Example 3, respectively, in gravure inks was performed in a similar manner as in Test 2. The results of the evaluation are shown in Table 3. The pigment of Reference Example 3 showed excellent transparency, coloring strength and gloss compared with the pigment of Comparative Example 3. It is clear from the foregoing that the production process of Reference Example 3 can provide a pigment having finer and more uniform particles and better dispersibility than the production process of Comparative Example 3.

**Table 3**

| | Transparency | Coloring strength | Gloss |
|---|---|---|---|
| Reference Example 3 | 7 | 6 | 65.4 |
| Comp. Ex. 3 | 5 | 5 | 53.2 |

### Reference Example 4

2-Methoxy-4-nitroaniline was diazotized in a manner known *per* se in the art by using a 2.5-fold molar amount of hydrochloric acid and an equimolar amount of sodium nitrite to prepare a 0.125 mole/L diazo solution (8 L, solution temperature: 10°C). On the side, acetoacet-o-anisidide (209.3 parts) was dissolved in an aqueous solution which contained sodium hydroxide (50 parts) , followed by the addition of an aqueous solution of acetic acid to have a grounder component deposited so that a 0.0253 mole/L grounding solution of pH 4.2 (40 L, solution temperature: 20°C) was prepared.

As illustrated in FIG. 1, the grounding solution was next caused to flow as a first fluid **I** at a flow rate of 5 L/min by the feed pump **d** from the first feed tank 2 into the ejector 1 through the first flow path **a.** Owing to depressurization occurred in the ejector 1, the diazo solution was drawn as a second fluid **II** at a flow rate of 1 L/min (adjusted by the first flow control means **e)** from the second feed tank 3 through the second flow path **b** into the ejector 1 maintained at 20°C by the temperature control means **g,** and through a coupling reaction, a monoazo pigment [C.I. Pigment Yellow 74 (PY74)] was yielded.

The yield of the monoazo pigment was very good owing to the effects of a severe turbulence occurred concurrently with the coupling reaction in the ejector. The degree of an excess of the grounder component relative to the diazo component was as much as about 1 mole %. Nonetheless, the coupling reaction proceeded smoothly, and the coupling reaction time was about 8 min. The thus-obtained aqueous suspension of the resulting pigment was discharged from the ejector 1 through the third flow path **a' ,** and was stored in the treatment tank 5. After the thus-stored aqueous suspension of the pigment was heated to 90°C, the pigment was collected by filtration, washed with water and then dried to obtain the monoazo pigment (PY74) in a dry form.

### Comparative Example 4

A diazo solution was prepared in a similar manner as in Reference Example 4. On the side, acetoacet-o-anisidide (218 parts) was dissolved in an aqueous solution which contained sodium hydroxide (50 parts), followed by the addition of an aqueous solution of acetic acid to have a grounder component deposited so that a 0.0525 mole/L grounding solution of pH 4.2 (20 L, solution temperature: 20°C) was prepared. The grounding solution was charged in a batchwise single reaction tank equipped with a stirrer, and under stirring, the diazo solution was charged over 2 hours to form a monoazo pigment (PY74). The degree of an excess of the grounder component relative to the diazo component was 5 mole %. After the resulting aqueous suspension of the pigment was heated to 90°C, the pigment was collected by filtration, washed with water and then dried to obtain the monoazo pigment (PY74) in a dry form. Test 4

By the below-described methods, an applicability test of each of the dry pigments of PY74, which were obtained in Reference Example 4 and Comparative Example 4, respectively, in color toners was performed. As each test sample, a polyester resin (100 parts) and the pigment (5 parts) were stirred and mixed in a ball mill, melted and kneaded, cooled, and then ground and classified to obtain a color toner.

Hydrophobic silica (0.3 part) was added to the thus-obtained toner (50 parts), and with an electrophotographic printer, an evaluation was performed by the following methods.

### [Transparency]

Using the toners obtained as described above, solid images were printed on OHP sheets, respectively. The transparency of each image was visually determined. Supposing that the transparency of the toner making use of the pigment afforded in Comparative Example 4 had a standard value of 5, transparency was ranked in accordance with a 10-level grading scale. A greater value indicates higher transparency.

### [Coloring strength]

Based on each printed image, the coloring strength was visually determined in a similar manner as in the ranking of transparency. Supposing that the coloring strength of the toner making use of the pigment afforded in Comparative Example 4 had a standard value of 5, coloring strength was ranked in accordance with a 10-level grading scale. A greater value indicates higher coloring strength.

### [Dispersibility]

The state of dispersion of each pigment in a dispersing medium was visually determined. Supposing that the dispersibility of the toner making use of the pigment afforded in Comparative Example 4 had a standard value of 5, dispersibility was ranked in accordance with a 10-level grading scale. A greater value indicates better dispersibility.

The results of the above evaluation are shown in Table 4. The pigment of Reference Example 4 showed excellent transparency, coloring strength and dispersibility compared with the pigment of Comparative Example 4. It is clear from the foregoing that the production process of Reference Example 4 can provide a pigment having finer and more uniform particles and better dispersibility than the production process of Comparative Example 4.

**Table 4**

| | Transparency | Coloring strength | Dispersibility |
|---|---|---|---|
| Reference Example 4 | 7 | 7 | 7 |
| Comp. Ex. 4 | 5 | 5 | 5 |

### [Second embodiment]

### Example 5

Employed were the diazo solution (8 L, solution temperature: 5°C) prepared in Reference Example 1 and the grounding solution (8 L, solution temperature: 20°C) prepared in Reference Example 1. Also prepared was a buffer solution of pH 4.7 (20L, solution temperature: 20°C) which consisted of an 80% solution of acetic acid in water (300 parts), sodium hydroxide (80 parts) and water.

As illustrated in FIG. 4, the buffer solution was next caused to flow as a first fluid I at a flow rate of 5 L/min by the feed pump d from the first feed tank 2 into the ejector 1 through the first flow path **a.** Owing to depressurization occurred in the ejector 1, the diazo solution was drawn as a second fluid **II** at a flow rate of 0.5 L/min (adjusted by the first flow control means e) from the second feed tank 3 through the second flow path **b,** and the grounding solution was also drawn as a third fluid **III** at a flow rate of 0.5 L/min (adjusted by the second flow control means **f)** from the third feed tank 4 through the fifth flow path **c,** both into the ejector 1 maintained at 20°C by the temperature control means **g,** and through a coupling reaction, a disazo pigment (PY12) was yielded.

A mixture of the resulting suspension of the disazo pigment (PY12) and the buffer solution was recirculated to the first feed tank 2 through the fourth flow path **a",** and was again fed by the feed pump **d** to the ejector 1 through the first flow path **a.** The recirculation was continued until the diazo solution and grounding solution to be drawn through the second and fifth flow paths **b,c,** respectively, became no longer remaining. The drawn rates of the diazo solution and grounding solution were gradually reduced by the first and second flow control means **e,f.**

The yield of the pigment was very good owing to the effects of a severe turbulence occurred concurrently with the coupling reaction in the ejector. The degree of an excess of the grounder component relative to the diazo component was as much as about 1 mole %. Nonetheless, the coupling reaction proceeded smoothly, and the coupling reaction time was about 30 min. The thus-obtained aqueous suspension of the resulting pigment was discharged from the ejector 1 through the third flow path **a',** and was stored in the treatment tank 5. After the thus-stored aqueous suspension of the pigment was heated to 90°C, the pigment was collected by filtration and washed with water to obtain a wet cake of the disazo pigment (PY12) . The pigment content of the wet cake was 24.3%.

### Test 5

An applicability test of each of the wet cakes of PY12, which were afforded in Example 5 and Comparative Example 1, respectively, in offset inks was performed in a similar manner as in Test 1, and the results of Table 5 were obtained. The ranking methods were the same as those described above in Test 1. The pigment of Example 5 showed excellent transparency, coloring strength and gloss compared with the pigment of Comparative Example 1. It is clear from the foregoing that the production process of Example 5 can provide a pigment having finer and more uniform particles and better dispersibility than the production process of Comparative Example 1.

**Table 5**

| | Transparency | Coloring strength | Gloss |
|---|---|---|---|
| Example 5 | 7 | 1.58 | 56.0 |
| Comp. Ex. 1 | 5 | 1.47 | 52.5 |

### Example 6

A disazo pigment (PY14) was produced in a similar manner as in Example 5 except for the use of acetoacet-o-toluidide (387 parts) instead of the use of acetoacetanilide (358 parts) . The thus-obtained wet cake pigment was dried to afford the disazo pigment (PY14) in a dry form.

### Test 6

An applicability test of each of the dry pigments of PY14, which were afforded in Example 6 and Comparative Example 2, respectively, in gravure inks was performed in a similar manner as in Test 2, and the results of Table 6 were obtained. The ranking methods were the same as those described above in Reference Example 2. The pigment of Example 6 showed excellent transparency, coloring strength and gloss compared with the pigment of Comparative Example 2. It is clear from the foregoing that the production process of Example 6 can provide a pigment having finer and more uniform particles and better dispersibility than the production process of Comparative Example 2.

**Table 6**

| | Transparency | Coloring strength | Gloss |
|---|---|---|---|
| Example 6 | 7 | 6 | 61.7 |
| Comp. Ex. 2 | 5 | 5 | 46.4 |

### Example 7

3-Amino-4-methoxybenzanilide was diazotized in a manner known *per* se in the art by using a 3. 5-fold molar amount of hydrochloric acid and an equimolar amount of sodium nitrite, followed by the addition of sodium acetate to prepare a 0.05 mole/L diazo solution of pH 4.0 (20 L, solution temperature: 5°C) . As a grounding solution, on the other hand, the grounding solution (8 L, solution temperature: 20°C) prepared in Reference Example 3 was used. As illustrated in FIG. 3, the diazo solution was next caused to flow as a first fluid **I** at a flow rate of 5 L/min by the feed pump **d** from the first feed tank 2 into the ejector 1 through the first flow path **a.** Owing to depressurization occurred in the ejector 1, the grounding solution was drawn as a second fluid **II** at a flow rate of 1 L/min (adjusted by the first flow control means **e)** from the second feed tank 3 through the second flow path **b** into the ejector 1 maintained at 20°C by the temperature control means **g,** and through a coupling reaction, a naphthol AS pigment (PR146) was yielded.

A mixture of the resulting suspension of the naphthol AS pigment (PR146) and the diazo solution was recirculated to the first feed tank 2 through the fourth flow path **a",** and was again fed by the feed pump **d** to the ejector 1 through the first flow path **a.** The recirculation was continued until the grounding solution to be drawn through the second flow path **b** became no longer remaining. The drawn rate of the grounding solution was gradually reduced by the first flow control means **e.** The yield of the naphthol AS pigment was very good owing to the effects of a severe turbulence occurred concurrently with the coupling reaction in the ejector. The degree of an excess of the grounder component relative to the diazo component was as much as about 1 mole %. Nonetheless, the coupling reaction proceeded smoothly, and the coupling reaction time was about 30 min. The aqueous suspension of the resulting pigment was discharged from the ejector 1 through the third flow path a' , and was stored in the treatment tank 5. After the thus-stored aqueous suspension of the pigment was heated to 90°C, the pigment was collected by filtration, washed with water, and then dried to obtain the naphthol AS pigment (PR146) in a dry form.

### Test 7

An applicability test of each of the dry pigments of PR146, which were obtained in Example 7 and Comparative Example 3, respectively, in gravure inks was performed in a similar manner as in Test 3. The results of the evaluation are shown in Table 7. The ranking methods were the same as those described above in Test 3. The pigment of Example 7 showed excellent transparency, coloring strength and gloss compared with the pigment of Comparative Example 3. It is clear from the foregoing that the production process of Example 7 can provide a pigment having finer and more uniform particles and better dispersibility than the production process of Comparative Example 3.

**Table 7**

| | Transparency | Coloring strength | Gloss |
|---|---|---|---|
| Example 7 | 7 | 6 | 64.5 |
| Comp. Ex. 3 | 5 | 5 | 53.2 |

### Example 8

The diazo solution (8 L, solution temperature: 10°C) prepared in Reference Example 4 was used. On the side, acetoacet-o-anisidide (209.3 parts) was dissolved in an aqueous solution which contained sodium hydroxide (50 parts) , followed by the addition of an aqueous solution of acetic acid to have a grounder component deposited so that a 0.0505 mole/L grounding solution of pH 4.2 (40 L, solution temperature: 20°C) was prepared.

As illustrated in FIG. 3, the grounding solution was next caused to flow as a first fluid **I** at a flow rate of 5 L/min by the feed pump **d** from the first feed tank 2 into the ejector 1 through the first flow path **a.** Owing to depressurization occurred in the ejector 1, the diazo solution was drawn as a second fluid **II** at a flow rate of 1 L/min (adjusted by the first flow control means **e)** from the second feed tank 3 through the second flow path **b** into the ejector 1 maintained at 20°C by the temperature control means **g,** and through a coupling reaction, a monoazo pigment (PY74) was yielded.

A mixture of the resulting suspension of the monoazo pigment (PY74) and the grounding solution was recirculated to the first feed tank 2 through the fourth flow path **a",** and was again fed by the feed pump **d** to the ejector 1 through the first flow path **a.** The recirculation was continued until the diazo solution to be drawn through the second flow path b became no longer remaining. The drawn rate of the diazo solution was gradually reduced by the first flow control means e. The yield of the monoazo pigment was very good owing to the effects of a severe turbulence occurred concurrently with the coupling reaction in the ejector. The degree of an excess of the grounder component relative to the diazo component was as much as about 1 mole %. Nonetheless, the coupling reaction proceeded smoothly, and the coupling reaction time was about 30 min. The aqueous suspension of the resulting pigment was discharged from the ejector 1 through the third flow path **a' ,** and was stored in the treatment tank 5. After the thus-stored aqueous suspension of the pigment was heated to 90°C, the pigment was collected by filtration, washed with water, and then dried to obtain the monoazo pigment (PY74) in a dry form. Test 8

An applicability test of each of the dry pigments of PY74, which were obtained in Example 8 and Comparative Example 4, respectively, in color toners was performed in a similar manner as in Test 4. The results of the evaluation are shown in Table 8. The ranking methods were the same as those described above in Test 4. The pigment of Example 8 showed excellent transparency, coloring strength and dispersibility compared with the pigment of Comparative Example 4. It is clear from the foregoing that the production process of Example 8 can provide a pigment having finer and more uniform particles and better dispersibility than the production process of Comparative Example 4.

**Table 8**

| | Transparency | Coloring strength | Dispersibility |
|---|---|---|---|
| Example 8 | 7 | 7 | 7 |
| Comp. Ex. 4 | 5 | 5 | 5 |

### [Third Reference embodiment]

### Reference Example 9

In an aqueous solution with sodium hydroxide (120 parts)contained therein, acetoacetanilide (344 parts), 2-acetoacetylaminobenzoic acid (8.9 parts) and 4-acetoacetylaminobenzamide (8.9 parts) were dissolved to prepare a 0.253 mole/L grounding solution (8 L, solution temperature: 20°C). The grounding solution, the diazo solution (8 L, solution temperature: 5°C) prepared in Reference Example 1, and the buffer solution (80 L, solution temperature: 20°C) prepared in Reference Example 1 were provided. A wet cake of a disazo pigment (PY12) was then obtained in a similar manner as in Example 1. The pigment content of the wet cake was 24.3%.

### Comparative Example 5

A diazo solution was prepared in a similar manner as in Reference Example 1. On the side, acetoacetanilide (361 parts), 2-acetoacetylaminobezoic acid (9.3 parts) and 4-acetoacetylaminobenzamide (9.3 parts) were dissolved in an aqueous solution, which contained sodium hydroxide (120 parts) , to prepare a 0.265 mole/L grounding solution (8 L, solution temperature: 20°C) . Also prepared was a buffer solution of pH 4.7 (20 L, solution temperature: 20°C) which consisted of an 80% solution of acetic acid in water (300 parts), sodium hydroxide (80 parts) and water. The buffer was charged in a batchwise single reaction tank equipped with a stirrer, and under stirring, the diazo solution and the grounding solution were simultaneously charged over 1.5 hours through separate inlet lines to form a disazo pigment (PY12). The degree of an excess of the grounder component relative to the diazo component was 6 mole %. After the aqueous suspension of the pigment was heated to 90°C, the pigment was collected by filtration and washed with water to afford a wet cake of the disazo pigment (PY12). The pigment content of the wet cake was 25.4%.

### Test 9

An applicability test of each of the wet cakes of PY12, which were afforded in Reference Example 9 and Comparative Example 5, respectively, in offset inks was performed in a similar manner as in Test 1, and the results of Table 9 were obtained. The ranking methods were the same as those described above in Test 1. The pigment of Reference Example 9 showed excellent transparency, coloring strength and gloss compared with the pigment of Comparative Example 5. It is clear from the foregoing that the production process of Reference Example 9 can provide a pigment having finer and more uniform particles and better dispersibility than the production process of Comparative Example 5.

**Table 9**

| | Transparency | Coloring strength | Gloss |
|---|---|---|---|
| Reference Example 9 | 7 | 1.59 | 57.3 |
| Comp. Ex. 5 | 5 | 1.50 | 51.5 |

### Reference Example 10

A diazo solution was prepared in a similar manner as in Reference Example 1. On the side, acetoacet-o-toluidide (367 parts) and 4-acetoacetylaminobenzenesulfonic acid (26 parts) were dissolved in an aqueous solution, which contained sodium hydroxide (120 parts), to prepare a 0.253 mole/L grounding solution (8 L, solution temperature: 20°C). Also prepared was a buffer solution of pH 4.7 (80 L, solution temperature: 20°C) which consisted of an 80% solution of acetic acid in water (300 parts), sodium hydroxide (80 parts) and water. A disazo pigment (PY14) was then produced in a similar manner as in Reference Example 9. The thus-obtained wet cake pigment was dried to afford the disazo pigment (PY14) in a dry form.

### Comparative Example 6

A diazo solution was prepared in a similar manner as in Reference Example 1. On the side, acetoacet-o-toluidide (385 parts) and4-acetoacetylaminobenzenesulfonic acid (27.3 parts) were dissolved in an aqueous solution, which contained sodium hydroxide (120 parts), to prepare a 0.265 mole/L grounding solution (8 L, solution temperature: 20°C). Also prepared was a buffer solution of pH 4.7 (20 L, solution temperature: 20°C) which consisted of an 80% solution of acetic acid in water (300 parts), sodium hydroxide (80 parts) and water. A disazo pigment (PY14) was then produced in a similar manner as in Comparative Example 5. The thus-obtained wet cake pigment was dried to afford the disazo pigment (PY14) in a dry form.

### Test 10

An applicability test of each of the dry pigments of PY14, which were obtained in Reference Example 10 and Comparative Example 6, respectively, in gravure inks was performed in a similar manner as in Test 2. The results of the evaluation are shown in Table 10. The ranking methods were the same as those described above in Test 2. The pigment of Reference Example 10 showed excellent transparency, coloring strength and gloss compared with the pigment of Comparative Example 6. It is clear from the foregoing that the production process of Reference Example 10 can provide a pigment having finer and more uniform particles and better dispersibility than the production process of Comparative Example 6.

**Table 10**

| | Transparency | Coloring strength | Gloss |
|---|---|---|---|
| Reference Example 10 | 7 | 6 | 64.8 |
| Comp. Ex. 6 | 5 | 5 | 50.4 |

### Reference Example 11

A mixture of 2-methoxy-4-nitroaniline (163 parts) and 4-methyl-2-nitroaniline(4.6parts) was diazotized in a manner known *per* se in the art by using a 2.5-fold molar amount of hydrochloric acid and an equimolar amount of sodium nitrite to prepare a 0.125 mole/L diazo solution (8 L, solution temperature: 10°C). On the side, acetoacet-o-anisidide (209.3 parts) was dissolved in an aqueous solution which contained sodium hydroxide (50 parts) , followed by the addition of an aqueous solution of acetic acid to have a grounder component deposited so that a 0.0253 mole/L grounding solution of pH 4.2 (40 L, solution temperature: 20°C) was prepared. A monoazo pigment (PY74) was then obtained in a dry form in a manner similar to Reference Example 4.

### Comparative Example 7

A diazo solution was prepared in a similar manner as in Reference Example 11. On the side, acetoacet-o-anisidide (218 parts) was dissolved in an aqueous solution which contained sodium hydroxide (50 parts), followed by the addition of acetic acid to have a grounder component deposited so that a 0.0525 mole/L grounding solution of pH 4.2 (20 L, solution temperature: 20°C) was prepared. The grounding solution was charged in a batchwise single reaction tank equipped with a stirrer, and under stirring, the diazo solution was charged over 2 hours to form a monoazo pigment (PY74). The degree of an excess of the grounder component relative to the diazo component was 5 mole %. After the resulting aqueous suspension of the pigment was heated to 90°C, the pigment was collected by filtration, washed with water and then dried to obtain the monoazo pigment (PY74) in a dry form.

### Test 11

An applicability test of each of the dry pigments of PY74, which were obtained in Reference Example 11 and Comparative Example 7, respectively, in color toners was performed in a similar manner as in Test 4. The results of the evaluation are shown in Table 11. The ranking methods were the same as those described above in Test 4. The pigment of Reference Example 11 showed excellent transparency, coloring strength and dispersibility compared with the pigment of Comparative Example 7. It is clear from the foregoing that the production process of Example 11 can provide a pigment having finer and more uniform particles and better dispersibility than the production process of Comparative Example 7.

**Table 11**

| | Transparency | Coloring strength | Dispersibility |
|---|---|---|---|
| Example 11 | 7 | 7 | 7 |
| Comp. Ex. 7 | 5 | 5 | 5 |

### [Fourth embodiment]

### Example 12

Provided were the diazo solution (8 L, solution temperature: 5°C) prepared in Reference Example 1, the buffer solution (20 L, solution temperature: 20°C) prepared in Example 5, and the grounding solution (8 L, solution temperature: 20°C) prepared in Reference Example 9. A wet cake of a disazo pigment (PY12) was then afforded in a similar manner as in Example 5. The pigment content of the wet cake was 24.5%.

### Test 12

An applicability test of each of the wet cakes of PY12, which were afforded in Example 12 and Comparative Example 5, respectively, in offset inks was performed in a similar manner as in Test 1, and the results of the evaluation are shown in Table 12 . The invention pigment of Example 12 showed excellent transparency, coloring strength and gloss compared with the pigment of Comparative Example 5. It is clear from the foregoing that the production process of Example 12 can provide a pigment having finer and more uniform particles and better dispersibility.

**Table 12**

| | Transparency | Coloring strength | Gloss |
|---|---|---|---|
| Example 12 | 7 | 1.57 | 56.5 |
| Comp. Ex. 5 | 5 | 1.50 | 51.5 |

### Example 13

Provided were the diazo solution (8 L, solution temperature: 5°C) and the buffer (20 L, solution temperature: 20°C), both of which were used in Example 12. Further, acetoacet-o-toluidide (367 parts) and 4-acetoacetylaminobenzenesulfonic acid (26 parts) were dissolved in an aqueous solution, which contained sodium hydroxide (120 parts), to prepare a 0.253 mole/L grounding solution (8 L, solution temperature: 20°C). A disazo pigment (PY14) was then produced in a similar manner as in Example 12. The thus-obtained wet cake pigment was dried to afford the disazo pigment (PY14) in a dry form.

### Test 13

An applicability test of each of the dry pigments of PY14, which were afforded in Example 13 and Comparative Example 6, respectively, in gravure inks was performed in a similar manner as in Test 2, and the results of the evaluation are shown in Table 13. The invention pigment of Example 13 showed excellent transparency, coloring strength and gloss compared with the pigment of Comparative Example 6. It is clear from the foregoing that the production process of Example 13 can provide a pigment having finer and more uniform particles and better dispersibility.

**Table 13**

| | Transparency | Coloring strength | Gloss |
|---|---|---|---|
| Example 13 | 7 | 6 | 63.7 |
| Comp. Ex. 6 | 5 | 5 | 50.4 |

### Example 14

A mixture of 2-methoxy-4-nitroaniline (163 parts) and 4-methyl-2-nitroaniline (4.6 parts) wasdiazotizedinamanner known *per* se in the art by using a 2.5-fold molar amount of hydrochloric acid and an equimolar amount of sodium nitrite to prepare a 0.125 mole/L diazo solution (8 L, solution temperature: 10°C). On the side, acetoacet-o-anisidide (209.3 parts) was dissolved in an aqueous solution which contained sodium hydroxide (50 parts) , followed by the addition of acetic acid to have a grounder component deposited so that a 0.0505 mole/L grounding solution of pH 4.2 (20 L, solution temperature: 20°C) was prepared. A monoazo pigment (PY74) was then obtained in a dry form in a manner similar to Example 8.

### Test 14

An applicability test of each of the dry pigments of PY74, which were obtained in Example 14 and Comparative Example 7, respectively, in color toners was performed in a similar manner as in Test 4. The results of the evaluation are shown in Table 14. The invention pigment of Example 14 showed excellent transparency, coloring strength and dispersibility compared with the pigment of Comparative Example 7. It is clear from the foregoing that the production process of Example 14 can provide a pigment having finer and more uniform particles and better dispersibility.

**Table 14**

| | Transparency | Coloring strength | Dispersibility |
|---|---|---|---|
| Example 14 | 7 | 7 | 7 |
| Comp. Ex. 7 | 5 | 5 | 5 |

### Industrial Applicability

Owing to the application of an ordinary ejector employed widely in industry, the process and system according to the present invention can produce insoluble azo pigment excellent in dispersibility, transparency, vividness, coloring strength and gloss, and moreover, can substantially shorten the coupling reaction time, can readily meet mass production, are economical, and have good productivity. These insoluble azo pigments are useful as offset inks, gravure inks, paints, colorants for plastics, textile-printing pigments, color toners, inkjet printing inks, and the like.

## Claims

1. A process for the production of an insoluble azo pigment, which comprises ejecting a diazo solution and a solution or fine dispersion of a coupling component as a grounding solution continuously into an ejector such that within said ejector, said diazo solution and grounding solution are mixed with each other and are subjected to a coupling reaction, wherein after subjecting said diazo solution and grounding solution to said coupling reaction, a mixture of a suspension of the resulting insoluble azo pigment and any one of said diazo solution and grounding solution and the other solution are continuously ejected into said ejector, and said mixture is repeatedly recirculated through said ejector until said coupling reaction is completed.

2. A process according to claim 1, wherein said diazo solution comprises a first diazo component and a second diazo component different from said first diazo component, and said second diazo component amounts to 0.1 to 50 mole % of said first diazo component.

3. A process according to claim 1, wherein said grounding solution comprises a first grounder component and a second grounder component different from said first grounder component, and said second grounder component amounts to 0.1 to 50 mole % of said first grounder component.

4. A process according to claim 1, further comprising ejecting a buffer solution continuously into said ejector.

5. A process according to claim 1, wherein subsequent to said coupling reaction, a suspension of the resulting insoluble azo pigment is subjected to heat treatment at 50°C or higher and 98 °C or lower.

6. A process according to claim 1, wherein said insoluble azo pigment is a monoazo pigment, diazo pigment, β-naphthol pigment, naphthol AS pigment or benzimidazolone pigment.

7. A system for the production of an insoluble azo pigment from a diazo solution and a grounding solution by a process as defined by claim 1, comprising the following units (1) to (5):
(1) a first feed tank (2) for a first fluid selected from said diazo solution or grounding solution, a first flow path (a) for feeding said first fluid to nozzles of an ejector (1), and a pump (d) for feeding said first fluid through said first flow path;
(2) said ejector (1) provided with said nozzles, a suction chamber, a diffuser, and a temperature control means (g);
(3) a second feed tank (3) for a second fluid other than said first fluid, a second flow path (b) for guiding said second fluid into said suction chamber of said ejector (1), and a first flow control means (e) for controlling a flow rate of said second fluid through said second flow path (b);
(4) a heat treatment tank (5) for subjecting to heat treatment a suspension of said insoluble azo pigment formed by a reaction between said first fluid and said second fluid, and a third flow path (a') for guiding said suspension of said insoluble azo pigment from said diffuser of said ejector to said heat treatment tank; and further comprising
(5) a fourth flow path (a") through which said third flow path (a') and said first feed tank (2) are connected with each other.

8. A system according to claim 7, wherein a buffer solution is additionally used, and said system further comprises a third feed tank (4) for said buffer solution as a third fluid other than said first and second fluids, a fifth flow path (c) for guiding said third fluid into said suction chamber of said ejector (1), and a second flow control means (f) for controlling a flow rate of said third fluid through said fifth flow path (c).

## Patentansprüche

1. Verfahren zur Herstellung eines unlöslichen Azopigments, das umfasst ein kontinuierliches Ausstoßen einer Diazolösung und einer Lösung oder feinen Dispersion einer Kupplungskomponente als eine Grundierlösung in einen Ejektor, sodass innerhalb des Ejektors die Diazolösung und die Grundierlösung miteinander vermischt und einer Kupplungsreaktion unterworfen werden, wobei nachdem die Diazolösung und die Grundierlösung dieser Kupplungsreaktion unterworfen wurden, eine Mischung einer Suspension des erhaltenen unlöslichen Azopigments und ggf. der Diazolösung, der Grundierlösung und einer anderen Lösung kontinuierlich in den Ejektor ausgestoßen werden und das Gemisch wiederholt durch den Ejektor zirkuliert bis die Kupplungsreaktion vollständig ist.

2. Das Verfahren nach Anspruch 1, wobei die Diazolösung eine erste Diazokomponente umfasst sowie eine zweite Diazokomponente, die von der ersten Diazokomponente verschieden ist, und die zweite Diazokomponente in 0,1 bis 50 Mol-% der zweiten Diazokomponente vorliegt.

3. Das Verfahren nach Anspruch 1, wobei die Grundierungslösung eine erste Grundierkomponente aufweist sowie eine zweite Grundierkomponente, die von der ersten Grundierkomponente verschieden ist, und die zweite Grundierkomponente zu 0,1 bis 50 Mol-% der ersten Grundierkomponente vorliegt.

4. Das Verfahren nach Anspruch 1, das ferner ein Ausstoßen einer Pufferlösung kontinuierlich in den Ejektor umfasst.

5. Das Verfahren nach Anspruch 1, wobei nach der Kupplungsreaktion eine Suspension des erhaltenen unlöslichen Azopigments einer Wärmebehandlung bei 50°C oder mehr und 98°C oder weniger unterworfen wird.

6. Das Verfahren nach Anspruch 1, wobei das unlösliche Azopigment ein Monoazopigment, ein Diazopigment, ein β-Naphtholpigment, ein Naphthol-AS-Pigment oder Benzimidazolonpigment ist.

7. System zur Herstellung eines unlöslichen Azopigments aus einer Diazolösung und einer Grundierlösung durch ein Verfahren, wie es in Anspruch 1 definiert wird, umfassend die folgenden Einheiten (1) bis (5):
(1) ein erster Tank (2) für ein erstes Fluid, ausgewählt aus der Diazolösung oder Grundierlösung, ein erster Fließweg (a) zum Einbringen des ersten Fluids in Düsen eines Ejektors (1), und eine Pumpe (d) zum Einbringen des ersten Fluids durch den ersten Fließweg;
(2) der Ejektor (1), der ausgestattet ist mit den Düsen, einer Ansaugkammer, einem Diffuser und einer Temperatursteuerung (g);
(3) ein zweiter Tank (3) für ein zweites Fluid, das von dem ersten Fluid verschieden ist, ein zweiter Fließweg (b) zur Leitung des zweiten Fluids in die Ansaugkammer des Ejektors (1) sowie eine erste Durchflusssteuerung (e) zur Steuerung einer Durchflussrate des zweiten Fluids durch den zweiten Fließweg (b);
(4) ein Wärmebehandlungstank (5), um eine Suspension des unlöslichen Azopigments, das durch eine Reaktion zwischen dem ersten Fluid und dem zweiten Fluid gebildet wird einer Wärmebehandlung zu unterwerfen, und ein dritter Fließpfad (a') zur Leitung der Suspension des unlöslichen Azopigments von dem Diffuser des Ejektors in den Wärmebehandlungstank; und ferner umfassend
(5) einen vierte Fließweg (a") durch den der dritte Fließweg (a') und der erste Tank (2) miteinander verbunden sind.

8. Das System nach Anspruch 7, wobei eine Pufferlösung zusätzlich verwendet wird und das System ferner umfasst einen dritten Tank (4) für die Pufferlösung als ein drittes Fluid, das von dem ersten und dem zweiten Fluid verschieden ist, ein fünfter Fließweg (c) zur Leitung des dritten Fluids in die Ansaugkammer des Ejektors (1) und eine zweite Durchflusssteuerung (f) zur Steuerung der Durchflussrate des dritten Fluids durch den fünften Fließpfad (c).

## Revendications

1. Procédé pour la production d'un pigment azoïque insoluble, lequel comprend l'éjection d'une solution diazoïque et d'une solution ou d'une dispersion fine d'un composant de couplage en tant que solution de préteinture de manière continue dans un éjecteur de telle sorte qu'à l'intérieur dudit éjecteur, ladite solution diazoïque et ladite solution de préteinture soient mélangées l'une avec l'autre et soient soumises à une réaction de couplage, dans lequel après avoir soumis ladite solution diazoïque et ladite solution de préteinture à ladite réaction de couplage, un mélange d'une suspension du pigment azoïque insoluble résultant et de l'une quelconque desdites solution diazoïque et solution de préteinture et l'autre solution sont éjectées de manière continue dans ledit éjecteur, et ledit mélange est remis en circulation de manière répétée à travers ledit éjecteur jusqu'à ce que ladite réaction de couplage soit achevée.

2. Procédé selon la revendication 1, dans lequel ladite solution diazoïque comprend un premier composant diazoïque et un second composant diazoïque différent dudit premier composant diazoïque, et ledit second composant diazoïque représente 0,1 à 50 % en mole dudit premier composant diazoïque.

3. Procédé selon la revendication 1, dans lequel ladite solution de préteinture comprend un premier composant de préteinture et un second composant de préteinture différent dudit premier composant de préteinture, et ledit second composant de préteinture représente 0,1 à 50 % en mole dudit premier composant de préteinture.

4. Procédé selon la revendication 1, comprenant en outre l'éjection d'une solution tampon de manière continue dans ledit éjecteur.

5. Procédé selon la revendication 1, dans lequel après ladite réaction de couplage, une suspension du pigment azoïque insoluble résultant est soumise à un traitement thermique à 50 °C ou plus et 98 °C ou moins.

6. Procédé selon la revendication 1, dans lequel ledit pigment azoïque insoluble est un pigment monoazoïque, un pigment diazoïque, un pigment de (β-naphthol, un pigment de naphthol AS ou un pigment de benzimidazolone.

7. Système pour la production d'un pigment azoïque insoluble à partir d'une solution diazoïque et d'une solution de préteinture par un procédé tel que défini dans la revendication 1, comprenant les unités (1) à (5) suivantes .
(1) un premier réservoir d'alimentation (2) pour un premier fluide choisi parmi ladite solution diazoïque ou ladite solution de préteinture, un premier trajet d'écoulement (a) pour alimenter ledit premier fluide vers des buses d'un éjecteur (1), et une pompe (d) pour alimenter ledit premier fluide à travers ledit premier trajet d'écoulement ;
(2) ledit éjecteur (1) pourvu desdites buses, d'une chambre d'aspiration, d' un diffuseur et de moyens de régulation de température (g) ;
(3) un deuxième réservoir d'alimentation (3) pour un deuxième fluide différent dudit premier fluide, un deuxième trajet d'écoulement (b) pour guider ledit deuxième fluide dans ladite chambre d'aspiration dudit éjecteur (1), et des premiers moyens de régulation de débit (e) pour réguler un débit dudit deuxième fluide à travers ledit deuxième trajet écoulement (b) ;
(4) un réservoir de traitement thermique (5) pour soumettre à un traitement thermique une suspension dudit pigment azoïque insoluble formé par une réaction entre ledit premier fluide et ledit deuxième fluide, et un troisième trajet d'écoulement (a') pour guider ladite suspension dudit pigment azoïque insoluble à partir dudit diffuseur dudit éjecteur jusqu'audit réservoir de traitement thermique ; et comprenant en outre
(5) un quatrième trajet d'écoulement (a") par lequel ledit troisième trajet d'écoulement (a') et ledit premier réservoir d'alimentation (2) sont reliés l'un à l'autre.

8. Système selon la revendication 7, dans lequel une solution tampon est en outre utilisée, et ledit système comprend également un troisième réservoir d'alimentation (4) pour ladite solution tampon en tant que troisième fluide différent desdits premier et deuxième fluides, un cinquième trajet d'écoulement (c) pour guider ledit troisième fluide dans ladite chambre d'aspiration dudit éjecteur (1), et des seconds moyens de régulation de débit (f) pour réguler un débit dudit troisième fluide à travers ledit cinquième trajet d'écoulement (c).
